# EUROPEAN PATENT APPLICATION

(11) **EP 2 886 594 A1**
(43) Date of publication of application: **24.06.2015**
(21) Application number: 13198203.5
(22) Date of filing: 18.12.2013
(51) Int. Cl.: C08K 5/098, C08K 5/524, C08L 27/06

(54) **Liquid zinc salt preparation as stabilizer for halogenated polymers**

(71) Applicant: Baerlocher GmbH, 85716 Unterschleissheim (DE)
(72) Inventor: The designation of the inventor has not yet been filed
(74) Representative: Herzog, Fiesser & Partner Patentanwälte PartG mbB

(57) **Abstract**

The present invention relates to a liquid stabilizer composition for the stabilization of halogenated thermoplastic resins comprising at least one zinc salt of an organic acid, at least one organic phosphite ester and a solvent, a method for producing a liquid stabilizer composition, and the use of the stabilizer composition for the stabilization of halogenated thermoplastic resins. The present invention further relates to polymer compositions comprising a halogenated thermoplastic resin which is stabilized by the liquid stabilizer compositions, and a method for producing such polymer compositions.

## Description

### Field of the invention

The present invention relates to a liquid stabilizer composition for the stabilization of halogenated thermoplastic resins comprising at least one zinc salt of an organic acid, at least one organic phosphite ester and a solvent. The present invention further relates to a method for producing a liquid stabilizer composition and the use of the stabilizer composition for the stabilization of halogenated thermoplastic resins. The present invention further relates to polymer compositions comprising a halogenated thermoplastic resin which is stabilized by a liquid stabilizer composition, and a method for producing such polymer compositions.

### Technical background

It is known that when halogenated thermoplastic resins are exposed to heat during processing or in the long-term use, they tend to easily decompose or degrade. Such undesired decomposition and degradation reactions often result in a discoloration and in a change of the material properties.

A particular problem is that halogen-containing polymers require a relatively high processing temperature before they acquire the rheological parameters needed for processing. However, in the case of unstabilized halogen-containing polymers, these temperatures are sufficient to cause noticeable onset of decomposition and degradation. Degradation of halogenated polymers, in particular PVC, is often accompanied by an elimination of hydrochloric acid from the polymer chain, resulting in unsaturated polymers with polyene sequences which may be colored. However, a degradation of the halogen-containing polymers not only leads to an undesired color change described above, but also to a change in the material properties.

Alongside these problems, which arise at the early stage of the processing of halogen-containing polymers, stability of color and minimum alteration in the material properties of the resulting polymer articles are also important during their use over a prolonged period. In particular, polymer articles comprising halogen-containing polymers are frequently used outdoors, where they are exposed to light, temperature cycles, weather and other external influences. However, under the above conditions polymer articles comprising halogen-containing polymers show poor stability of color and alterations in the material properties after short usage times.

Special requirements regarding the stability of color and material properties arise for rigid films comprising halogen-containing polymers. Due to their low layer thickness, changes in color, transparency and other material properties have an even higher impact on the material, its properties and appearance, in relation to other halogen-containing polymer articles.

The problems mentioned above are approached by using stabilizers which are added to the halogen-containing polymers prior to or during processing. Known stabilizers preferably used for the production of rigid films are, for example, organotin stabilizers or calcium-zinc stabilizers.

Organotin-containing stabilizers for halogenated thermoplastic resins provide good initial color, stability of color and transparency of rigid films comprising halogen-containing polymers. However, using organotin-containing stabilizers may be undesirable for various reasons. The accessibility of tin and tin-containing compounds is fluctuating in the market. A dependency from tin and tin-containing compounds is therefore accompanied by fluctuating, often very high prices, and the risk of supply shortages. Moreover, tin and tin-containing compounds are mostly toxic, noxious, irritant or harmful to health and environment, or any combinations therefrom. Due to their mostly low boiling points, tin and tin-containing compounds are easily released in the ambient air, especially under heat treatment, like when processing halogen-containing polymers. Thus, the use of tin and tin-containing compounds underlies strict and even rising regulatory pressure. In order to meet such regulations, special equipment, like exhaust hoods, connections and supply lines, protective gear and devices, may be needed. Further, tin and tin-containing compounds have an unpleasant odor, which also substantiates the need of special exhausting hoods when working with tin and tin-containing compounds.

In comparison to organotin-containing stabilizers, the performance of calcium-zinc stabilizers regarding the initial color, stability of color and transparency of halogenated thermoplastic resins during and after processing is insufficient. In order to improve the initial color and the stability of color, high amounts of a zinc component are necessary. However, such high amounts of the zinc component have an insufficient solubility in the halogenated thermoplastic resins, resulting in clouding and haze formation. Moreover, high amounts of a zinc component can have a negative impact on the melting behavior of the halogenated thermoplastic resins during processing.

### Problems

There was therefore a need for a stabilizer composition for halogenated thermoplastic resins which is free from organotin and nevertheless brings out excellent initial color, stability of color and transparency. Particularly, a stabilizer composition was required which ensures good initial color and transparency of halogen-containing polymer compositions, which is also retained during short interruptions during the processing with their attendant increase in thermal exposure on the material. There was also a need for a stabilizer composition which also permits good retention of color in the long-term use of polymer articles, especially rigid films, produced from halogenated thermoplastic resins.

It was therefore an object of the present invention to provide stabilizer compositions for halogenated thermoplastic resins which satisfy the above-mentioned requirements.

It was therefore an object of the present invention to provide a stabilizer composition which is free of organotin compounds. It was a further object of the present invention to provide a stabilizer composition which can be easily handled and which improves the processability of halogenated thermoplastic resins. Another object of the invention was the provision of a stabilizer composition which provides good initial color to halogenated thermoplastic resins. It was yet another object of the invention to provide a stabilizer composition which provides good stability of color to halogenated thermoplastic resins over prolonged periods of time and under a variety of external influences. According to a further object of the invention the stabilizer compositions provide high transparency to halogenated thermoplastic resins.

Another object of the present invention was the provision of polymer compositions which are free of organotin and which have good initial color, good stability of color, high transparency, or good processability, or any combinations of two or more of these properties, preferably all of these properties.

### Summary of the invention

The objects underlying the present invention are achieved by a liquid stabilizer composition comprising a zinc salt of an organic acid or a mixture of two or more zinc salts of an organic acid (a), an organic phosphite ester or a mixture of two or more organic phosphite esters (b), and a solvent (c).

For the purposes of the present invention, a "stabilizer composition" is a composition which can be used for the stabilization of halogenated thermoplastic resins. To achieve this stabilizing effect, the stabilizer composition according to the present invention is generally mixed with a halogenated thermoplastic resin intended for the stabilization, wherein the step of mixing the stabilizer composition and the halogenated thermoplastic resin can be performed before or during the processing.

### Detailed description of the invention

The present invention provides a liquid stabilizer composition for the stabilization of halogenated thermoplastic resins comprising
(a) a zinc salt of an organic acid or a mixture of two or more zinc salts of an organic acid,
(b) an organic phosphite ester or a mixture of two or more organic phosphite esters, and
(c) a solvent.

A stabilizer composition according to the present invention thus comprises at least three constituents, (a), (b), and (c).

### Constituent (a)

As a first constituent (a), the present invention comprises a zinc salt of a mono-, di- or trivalent organic acid or a mixture of two or more zinc salts of an organic acid.

Examples of suitable organic moieties of the organic acid of the zinc salt of an organic acid are linear or branched, saturated or unsaturated alkyl moieties having from 1 to 43 carbon atoms, saturated or unsaturated, substituted or unsubstituted cycloalkyl moieties with 5 to 43 carbon atoms, linear or branched, substituted or unsubstituted alkenyl moieties with 2 to 43 carbon atoms, linear or branched, substituted or unsubstituted alkinyl moieties with 2 to 43 carbon atoms, substituted or unsubstituted aryl moieties with 6 to 43 carbon atoms, or substituted or unsubstituted aralkyl moieties with 7 to 43 carbon atoms.

Preferred alkyl moieties are linear or branched, substituted or unsubstituted alkyl moieties with 4 to 23 carbon atoms, for example, with 7 to 23 carbon atoms. More preferred alkyl moieties are alkyl moieties with 11 to 19 carbon atoms. Preferred cycloalkyl moieties are saturated or unsaturated, substituted or unsubstituted cycloalkyl moieties with 4 to 23 carbon atoms, for example with 4 to 19 carbon atoms. More preferred cycloalkyl moieties are cycloalkyl moieties with 4 to 11 carbon atoms. Preferred alkenyl moieties are linear or branched, substituted or unsubstituted alkenyl moieties with 4 to 23 carbon atoms, for example with 7 to 19 carbon atoms. More preferred alkenyl moieties are alkenyl moieties with 11 to 19 carbon atoms. Preferred alkinyl moieties are linear or branched, substituted or unsubstituted alkinyl moieties with 4 to 23 carbon atoms, for example with 7 to 17 carbon atoms. Preferred aryl moieties are linear or branched, substituted or unsubstituted aryl moieties with 5 to 23 carbon atoms, for example with 6 to 11 carbon atoms.

Preferably, the organic acid of the zinc salt of an organic acid is selected from the group consisting of saturated or unsaturated, linear or branched, substituted or unsubstituted organic mono- or di-carboxylic acids with 5 to 44 carbon atoms.

Thus, it can be preferred that a liquid stabilizer composition comprises at least one organic acid of a zinc salt of an organic acid (a), which is selected from the group consisting of saturated or unsaturated, linear or branched, substituted or unsubstituted organic mono- or di-carboxylic acids with 5 to 44 carbon atoms, at least one organic phosphite ester (b), and a solvent (c).

For example, the zinc salt of an organic acid is the zinc salt of a saturated or unsaturated, linear organic mono-carboxylic acid with 5 to 24 carbon atoms, or with 8 to 18 carbon atoms or with 12 to 18 carbon atoms, preferably of myristoleic acid, palmitoleic acid, sapienic acid, oleic acid, elaidic acid, vaccenic acid, linoleic acid, linoelaidic acid, α-linolenic acid, lauric acid, myristic acid, palmitic acid, caprylic acid, neodecanoic acid, versatic acid, or stearic acid. More preferably, the zinc salt of an organic acid is zinc oleate.

Thus, it can be preferred that a liquid stabilizer composition comprises zinc oleate, at least one organic phosphite ester (b), and a solvent (c).

According to the present invention, the liquid stabilizer compositions can comprise one zinc salt of an organic acid. Further, the liquid stabilizer compositions can comprise a mixture of two or more zinc salts of an organic acid, for example a mixture of two zinc salts of an organic acid, or a mixture of three zinc salts of an organic acid, or a mixture of four zinc salts of an organic acid, or a mixture of five zinc salts of an organic acid. Preferably, the liquid stabilizer compositions according to the present invention comprise at least two zinc salts of an organic acid.

Thus, it can be preferred that a liquid stabilizer composition comprises a mixture of two or more zinc salts of an organic acid (a), at least one organic phosphite ester (b), and a solvent (c).

If the liquid stabilizer composition according to the present invention comprises a mixture of two or more zinc salts of an organic acid, it can be preferred that one zinc salt of the mixture of two or more zinc salts is selected from the group consisting of zinc salts of saturated or unsaturated, linear or branched, substituted or unsubstituted organic mono- or di-carboxylic acids with 5 to 44 carbon atoms, for example from the group consisting of zinc salts of saturated or unsaturated, linear organic mono-carboxylic acid with 5 to 24 carbon atoms, with 8 to 18 carbon atoms or with 12 to 18 carbon atoms, preferably from the group consisting of zinc salts of myristoleic acid, palmitoleic acid, sapienic acid, oleic acid, elaidic acid, vaccenic acid, linoleic acid, linoelaidic acid, α-linolenic acid, lauric acid, myristic acid, palmitic acid, caprylic acid, neodecanoic acid, versatic acid or stearic acid. More preferably, one zinc salt of a mixture of two or more zinc salts is zinc oleate.

If the liquid stabilizer composition according to the present invention comprises a mixture of two or more zinc salts of an organic acid, it can be preferred that a second zinc salt of a mixture of two or more zinc salts is selected from the group consisting of zinc salts of substituted or unsubstituted, aromatic organic acids, for example of benzoic acid, alkylated benzoic acids, 4-tert-Butylbenzoic acid *e.g*. 2-methyl benzoic acid, 3-methyl benzoic acid, 4-methyl benzoic acid, 2-ethyl benzoic acid, 3-ethyl benzoic acid, 4-ethyl benzoic acid, and hydroxylated benzoic acids, *e.g*. 2-hydroxy benzoic acid, 3-hydroxy benzoic acid, 4-hydroxy benzoic acid. More preferably, a second zinc salt of a mixture of two or more zinc salts is zinc benzoate.

Thus, it can be preferred that a liquid stabilizer composition comprises a mixture of zinc oleate and zinc benzoate, at least one organic phosphite ester (b), and a solvent (c).

The proportion of the at least one zinc salt of an organic acid (a) in the liquid stabilizer compositions according to the present invention is in the range of from about 0.1 to about 80 wt.-% based on the total amount of the liquid stabilizer composition, for example from about 0.5 to about 60 wt.-% or from about 1 to about 50 wt.-% or from about 5 to about 30 wt.-%, based on the total weight of the liquid stabilizer composition.

### Constituent (b)

As a second constituent (b), the present invention comprises an organic phosphite ester or a mixture of two or more organic phosphite esters. The organic phosphite esters according to the present invention have from 1 to 3 organic moieties which may be identical, or two of which may be identical, or which may be different. It can be preferred that the organic phosphite esters have three organic moieties.

Examples of suitable organic moieties are linear or branched, saturated or unsaturated alkyl moieties having from 1 to 44 carbon atoms, saturated or unsaturated, substituted or unsubstituted cycloalkyl moieties with 5 to 44 carbon atoms, linear or branched, substituted or unsubstituted alkenyl moieties with 2 to 44 carbon atoms, linear or branched, substituted or unsubstituted alkinyl moieties with 2 to 44 carbon atoms, substituted or unsubstituted aryl moieties with 6 to 44 carbon atoms, or substituted or unsubstituted aralkyl moieties with 7 to 44 carbon atoms.

Preferred alkyl moieties are linear or branched, substituted or unsubstituted alkyl moieties with 5 to 24 carbon atoms, for example, with 8 to 24 carbon atoms. More preferred alkyl moieties are alkyl moieties with 8 to 18 carbon atoms. Preferred cycloalkyl moieties are saturated or unsaturated, substituted or unsubstituted cycloalkyl moieties with 5 to 24 carbon atoms, for example with 5 to 12 carbon atoms. More preferred cycloalkyl moieties are cycloalkyl moieties with 5 to 12 carbon atoms. Preferred alkenyl moieties are linear or branched, substituted or unsubstituted alkenyl moieties with 5 to 24 carbon atoms, for example with 8 to 18 carbon atoms. More preferred alkenyl moieties are alkenyl moieties with 12 to 18 carbon atoms. Preferred alkinyl moieties are linear or branched, substituted or unsubstituted alkinyl moieties with 5 to 24 carbon atoms, for example with 8 to 18 carbon atoms. Preferred aryl moieties are linear or branched, substituted or unsubstituted aryl moieties with 6 to 24 carbon atoms, for example with 6 to 12 carbon atoms. More preferred aryl moieties are phenyl and substituted phenyl moieties. Preferred aralkyl moieties are linear or branched, substituted or unsubstituted aralkyl moieties with 7 to 24 carbon atoms, for example with 7 to 15 carbon atoms.

Thus, it can be preferred that the liquid stabilizer composition comprises at least one zinc salt of an organic acid (a), an organic phosphite ester or a mixture of two or more organic phosphite esters (b), each having three organic moieties, and a solvent (c).

Examples of suitable organic phosphite esters are tristridecyl, tris(nonylphenyl), trilauryl, tridodecyl, triphenyl, octyl diphenyl, dioctyl phenyl, tri(octylphenyl), tribenzyl, octyl di(octylphenyl), tris(2-ethylhexyl), tritolyl, tris(2-cyclohexylphenyl), tri-α-naphthyl, tris(phenylphenyl), tris(2-phenylethyl), tris-(dimethyl phenyl), tricresyl, tetratridecyl 4,4' - butylidenebis-(2-tert-butyl-5-methylphenyl)-diphosphite, distearyl-pentaerythritol-diphosphite or tris(p- nonylphenyl)phosphite, or tristearyl sorbitol triphosphite, or any mixture of two or more of these.

For example, the phosphite compound is tristridecyl phosphite.

Thus, it can be preferred that the liquid stabilizer composition comprises at least one zinc salt of an organic acid (a), tristridecyl phosphite, and a solvent (c).

The proportion of the at least one organic phosphite ester (b) in the liquid stabilizer compositions according to the present invention is in the range of from about 0.1 to about 80 wt.-% based on the total amount of the liquid stabilizer composition, for example from about 0.5 to about 60 wt.-% or from about 1 to about 50 wt.-% or from about 5 to about 30 wt.-%, based on the total weight of the liquid stabilizer composition.

### Constituent (c)

As a third constituent (c), the present invention comprises a solvent.

For the purposes of the present invention, a "solvent" is a compound in which the constituents (a) and (b) of the stabilizer composition are soluble and which is different from the constituents (a) and (b). Further, for the purposes of the present invention, a "solvent" is a compound, which is liquid in a temperature range of from 0 to 250°C, preferably in a temperature range of from 15 to 200°C.

For the purpose of the invention, a substance is "liquid" when its viscosity at 20°C is in the range of from about 0.2 mPas to about 10⁶ mPas, for example, at least about 0.5 mPas or at least about 1 mPas, and less than about 10⁴ mPas or less than about 10³ mPas or less than about 100 mPas. It can be preferred that the viscosity of a liquid substance is in the range of from about 1 mPas to about 100 mPas.

For the purposes of the present invention, the constituents (a) and (b) of the liquid stabilizer composition are "soluble" in a solvent to the extent that the dissolved amount at 20°C is at least 0.1 wt.-% or at least 0.5 wt.-% or at least 1.0 wt.-%, or at least 3.0 wt.-% or at least 5.0 wt.-% or at least 10 wt.-% or at least 15 wt.-% or at least 20 wt.-%, based on the solvent. Preferably, the solubility is at least about 40 wt.-% or at least about 60 wt.-% or at least 80 wt.-% or higher, for example at least about 100 wt.-% or at least about 120 wt.-%, based on the solvent.

A liquid stabilizer composition according to the present invention can be composed exclusively of a solution, *i.e*., of a mixture in which the constituents (a) and (b) are molecularly dispersed in the solvent.

If the liquid stabilizer composition comprises any more constituents, *e.g*., additives, it is possible that they are dissolved in the solvent without any remaining undissolved constituents. However, if the liquid stabilizer composition comprises any further constituents, *e.g*., additives, it is equally possible that they remain undissolved and are only dispersed in the solvent to an amount of for example up to about 50, 40, 30, 20, 10 or 5 wt.-% or less, based on the total weight of the liquid stabilizer composition. Preferably, the liquid stabilizer composition according to the present invention comprises less than about 30 wt.-%, in particular less than about 10 wt.-%, or less than about 5 wt.-%, of undissolved components, based on the total weight of the liquid stabilizer composition.

The mixing ratio between the solvent and the further constituents of the liquid stabilizer composition can be varied widely. For example, the mixing ratio between the solvent and the further constituents of the liquid stabilizer composition is in the range of from 1:100 to 100:1 1 or from 1:80 to 80:1 or from 1:60 to 60:1 or from 1:40 to 40:1 or from 1:20 to 20:1 or from 1:10 to 10:1 or from 5:1 to 1:5 or from 3:1 to 1:3, the ratios being based on weight.

The solvent can be selected from aliphatic alcohols, for example from aliphatic alcohols having from 6 to 18 carbon atoms or from aliphatic alcohols having from 8 to 15 carbon atoms. It can be preferred that the solvent is selected from aliphatic alcohols having from 10 to 14 carbon atoms, for example n-undecanol, i-undecanol, t-undecanol, n-dodecanol, i-dodecanol, t-dodecanol, n-tridecanol, i-tridecanol, or t-tridecanol.

The solvent (c) can comprise only one component. However, it is equally possible that the solvent (c) comprises a mixture of two or more components. It can be preferred that the solvent (c) comprises a mixture of two or more aliphatic alcohols having from 6 to 18 carbon atoms or from aliphatic alcohols having from 8 to 15 carbon atoms, for example, a mixture of two or more aliphatic alcohols having from 10 to 14 carbon atoms.

Thus, it can be preferred that a liquid stabilizer composition comprises at least one zinc salt of an organic acid (a), at least one organic phosphite ester (b), and a mixture of two or more aliphatic alcohols having from 10 to 14 carbon atoms.

The proportion of the solvent in the liquid stabilizer compositions according to the present invention is in the range of from about 1 to about 90 wt.-%, for example from about 2 to about 75 wt.-% or from about 5 to about 60 wt.-% or from about 10 to about 50 wt.-%, based on the total weight of the liquid stabilizer composition.

### Additives

A liquid stabilizer composition according to the present invention can be used for the stabilization of halogenated thermoplastic resins without the addition of further additives. However, it is often advantageous to mix a liquid stabilizer composition with further additives.

Thus, the present invention also provides liquid stabilizer compositions comprising at least one zinc salt of an organic acid (a), at least one organic phosphite ester (b), a solvent (c), and at least one additive or a mixture of two or more additives.

### Epoxy compound

According to the present invention, suitable additives for the liquid stabilizer compositions are epoxy compounds.

For example, the epoxy compounds are epoxidized fatty acid esters. Preferably, the epoxidized fatty acid esters are composed of an epoxidized fatty acid and an alkyl residue.

Epoxidized fatty acids are obtainable via epoxidation of unsaturated fatty acids, preferably unsaturated fatty acids with 12 to 24 carbon atoms, for example myristoleic acid, palmitoleic acid, sapienic acid, oleic acid, elaidic acid, vaccenic acid, linoleic acid, linoelaidic acid, α-linolenic acid, gondoic acid, arachidonic acid, or eurucic acid.

Preferred alkyl residues are linear or branched alkyl residues with 1 to 12 carbon atoms, for example methyl, ethyl, n-propyl, i-propyl, n-butyl, i-butyl, t-butyl, n-hexyl or 2-ethylhexyl.

A preferred epoxy compound is 2-ethylhexyl epoxystearate.

Further examples of epoxy compounds are epoxidized soya oil, epoxidized olive oil, epoxidized linseed oil, epoxidized castor oil, epoxidized peanut oil, epoxidized maize oil, epoxidized cottonseed oil, and glycidyl compounds.

Glycidyl compounds contain a glycidyl group directly bonded to a carbon atom, oxygen atom, nitrogen atom, or sulfur atom. Glycidyl esters or methylglycidyl esters are obtainable via reaction of a compound having at least one carboxy group in the molecule and epichlorohydrin or glycerol dichlorohydrin, or methylepichlorohydrin. The reaction advantageously takes place in the presence of bases.

Examples of compounds that can be used having at least one carboxy group in the molecule are aliphatic carboxylic acids. Examples of these acids are glutaric acid, adipic acid, pimelic acid, suberic acid, azelaic acid, sebacic acid, or dimerized or trimerized linoleic acid, acrylic acid, methacrylic acid, caproic acid, caprylic acid, lauric acid, myristic acid, palmitic acid, stearic acid, or pelargonic acid. Cycloaliphatic carboxylic acids are equally suitable, for example cyclohexanecarboxylic acid, tetrahydrophthalic acid, 4-methyltetrahydrophthalic acid, hexahydrophthalic acid, endomethylenetetrahydrophthalic acid, or 4-methylhexahydrophthalic acid. Other suitable compounds are aromatic carboxylic acid, such as benzoic acid, phthalic acid, isophthalic acid, trimellitic acid, or pyromellitic acid.

Thus, it can be preferred that liquid the stabilizer composition comprise at least one zinc salt of an organic acid (a), at least one organic phosphite ester (b), a solvent (c), and at least an epoxy compound.

Further, it can be preferred that liquid the stabilizer composition comprise at least one zinc salt of an organic acid (a), at least one organic phosphite ester (b), a solvent (c), and 2-ethylhexyl epoxystearate.

The amount of epoxy compounds in the stabilizer composition according to the present invention can be up to about 20 wt.-%, for example from 0 wt.-% to about 10 wt.-%, or from about 0.1 to about 8 wt.-%, or from about 0.2 to about 6 wt.-%, or from about 0.5 to about 5 wt.-%, or from about 1 to about 3 wt.-%, based on the total weight of the liquid stabilizer composition.

### 1,3-dicarbonyl compounds

According to the present invention, suitable additives for the liquid stabilizer compositions are 1,3-dicarbonyl compounds, in particular β-diketones and β-ketoesters.

For the purposes of the present invention, suitable dicarbonyl compounds are those of the general formula R'C(O)CHR"-C(O)R"', examples of these being those described on page 5 of EP 1 046 668 A, the disclosure in that document is expressly incorporated herein by reference and is considered to be part of the disclosure of the present text. Examples of particularly suitable compounds are acetylacetone, butanoylacetone, heptanoylacetone, stearoylacetone, palmitoylacetone, lauroylacetone, 7-tert-nonylthioheptane-2,4-dione, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl)methane, 4-methoxybenzoylbenzoylmethane bis(4-methoxybenzoyl)methane, benzoylformylmethane, benzoylacetylphenylmethane, 1-benzoyl-1-acetylmethane, stearoyl-4-methoxybenzoylmethane, bis(4-tertbutylbenzoyl) methane, benzoylphenylacetylmethane, bis(cyclohexanoyl)methane, dipivaloylmethane, 2-acetylcyclopentanone, 2-benzoylcyclopentanone, the methyl, ethyl, butyl, 2-ethylhexyl, dodecyl, or octadecyl esters of diacetoacetic acid, and also propionyl- or butyrylacetic acids having from 1 to 18 carbon atoms, and also the ethyl, propyl, butyl, hexyl, or octyl ester of stearoylacetic acid, or polynuclear β-ketoesters as described in EP 433 230 A, the disclosure in that document is expressly incorporated herein by reference and is considered to be part of the disclosure of the present text, or dehydroacetic acid, and also its zinc, magnesium or alkali metal salts, or the alkali metal, alkaline earth metal or zinc chelates of these compounds.

Preferred 1,3-dicarbonyl compounds are **Dibenzoylmethane** lauroylbenzoylmethane, palmitoylbenzoylmethane, stearoylbenzoylmethane, isooctylbenzoylmethane, and stearoyl-4-methoxybenzoylmethane, more preferred stearoylbenzoylmethane.

The amount of 1,3-dicarbonyl compounds in the stabilizer composition according to the present invention can be up to about 20 wt.-%, for example from 0 wt.-% to about 15 wt.-%, or from about 0.1 to about 10 wt.-%, or from about 0.2 to about 8 wt.-%, or from about 0.5 to about 5 wt.-%, or from about 1 to about 3 wt.-%, based on the total weight of the liquid stabilizer composition.

### Polyols

According to the present invention, suitable additives for the liquid stabilizer compositions are polyols.

Examples of suitable polyols are pentaerythritol, dipentaerythritol, tripentaerythritol, bistrime-thylolpropane, inositol, polyvinyl alcohol, bistrimethylolethane, trimethylolpropane, sorbitol, maltitol, isomaltitol, lactitol, lycasine, mannitol, lactose, leucrose, tris(hydroxyethyl) isocyanurate, palatinitol, tetramethylolcyclohexanol, tetramethylolcyclopentanol, tetramethylolcyclo-heptanol, glycerol, diglycerol, polyglycerol, thiodiglycerol, tris-2-hydroxyethyl isocyanurate (THEIC), trimethylol propane, polyol esters, glycols, and polyglycols.

Preferred polyols are pentaerythritol, dipentaerythritol, and THEIC.

It can be preferred that the liquid stabilizer compositions comprise dipentaerythritol. It can also be preferred that the liquid stabilizer compositions comprise THEIC. It can also be preferred that the liquid stabilizer compositions comprise a mixture of dipentaerythritol and THEIC. The amount of polyols in the stabilizer composition according to the present invention can be up to about 20 wt.-%, for example from 0 wt.-% to about 10 wt.-%, or from about 0.1 to about 8 wt.-%, or from about 0.2 to about 6 wt.-%, or from about 0.5 to about 5 wt.-%, or from about 1 to about 3 wt.-%, based on the total weight of the liquid stabilizer composition.

### Hydrotalcite

According to the present invention, suitable additives for the liquid stabilizer compositions are hydrotalcites, zeolites, and hydrocalumites. Suitable hydrotalcites, zeolites, and hydrocalumites are described for example on pages 27 to 29 of EP 1 046 668 A, on pages 3, 5, and 7 of EP 256 872 A, on pages 2 and 3 of DE 41 06 411 C, or on pages 2 and 3 of DE 41 06 404 C, the disclosure in that document is expressly incorporated herein by reference and is considered to be part of the disclosure of the present text. Preferably, the liquid stabilizer composition comprises hydrotalcite.

The amounts of the hydrotalcites, zeolites, and hydrocalumites in the stabilizer composition according to the present invention can be up to about 35 wt.-%, for example up to about 25 wt.-%, based on the total weight of the liquid stabilizer composition.

### Metal oxides, hydroxides

According to the present invention, suitable additives for the liquid stabilizer compositions are metal oxides and metal hydroxides.

The metal cations of the metal oxides, and metal hydroxides suitable as additives according to the present invention are, for example, divalent cations, preferably the cations of calcium, zinc, lead, or mixtures thereof, more preferably calcium. It can be preferred that the liquid stabilizer compositions are free or substantially free of lead. "Substantially free" according to the present invention means an amount of less than 0.01 wt.-% based on the total weight of the liquid stabilizer composition.

The amount of the metal oxides, and metal hydroxides, or of mixtures of two or more thereof in the liquid stabilizer compositions can be up to about 20 wt.-%, for example from 0 wt.-% to about 10 wt.-%, or from about 0.1 to about 8 wt.-%, or from about 0.2 to about 6 wt.-%, or from about 0.5 to about 5 wt.-%, or from about 1 to about 3 wt.-%, based on the total weight of the liquid stabilizer composition.

### Calcium soaps

According to the present invention, suitable additives for the liquid stabilizer compositions are calcium soaps of saturated or unsaturated, linear or branched, aromatic, cycloaliphatic, or aliphatic carboxylic acids or hydroxycarboxylic acids preferably having from 2 to 22 carbon atoms.

Examples of suitable carboxylic acid anions encompass anions of monovalent carboxylic acids, such as acetic acid, propionic acid, butteric acid, valeric acid, hexanoic acid, enanthic acid, octanoic acid, neodecanoic acid, 2-ethylhexanoic acid, pelargonic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, n-propylbenzoic acid, salicylic acid, p-tert-octylsalicylic acid, sorbic acid, anions of divalent carboxylic acids and of their monoesters, *e.g*. oxalic acid, malonic acid, maleic acid, tartaric acid, zimaric acid, mandelic acid, malic acid, glycolic acid, oxalic acid, salicylic acid, polyglycoldicarboxylic acids whose degree of polymerization is from about 10 to about 12, phthalic acid, isophthalic acid, terephthalic acid, or hydroxyphthalic acid, anions of tri- or tetravalent carboxylic acids and their mono-, di-, or triesters, *e.g*. hemimellitic acid, trimellitic acid, pyromellitic acid, or citric acid, and also "superbasic" carboxylates as described for example in DE 41 06 404 A or in DE 40 02 988 A, the disclosure in that document is expressly incorporated herein by reference and is considered to be part of the disclosure of the present text.

Preferred are calcium soaps whose anions are derived from saturated or unsaturated carboxylic acids or hydroxycarboxylic acids having from about 8 to about 20 carbon atoms, for example stearates, oleates, laurates, palmitates, behenates, neodecanoates, versatates, hydroxystearates, dihydroxystearates, p-tert-butylbenzoates, or (iso)octanoates, more preferred.

It can be preferred that the liquid stabilizer compositions comprise calcium stearate.

The amount of the calcium soaps in the liquid stabilizer compositions can be up to about 20 wt.-%, for example from 0 wt.-% to about 15 wt.-%, or from about 0.1 to about 10 wt.-%, or from about 0.2 to about 8 wt.-%, or from about 0.5 to about 6 wt.-%, or from about 1 to about 3 wt.-%, based on the total weight of the liquid stabilizer composition.

### Lubricants

According to the present invention, suitable additives for the liquid stabilizer compositions are lubricants, such as paraffin waxes, polyethylene waxes, polypropylene waxes, montan waxes, ester lubricants, for example, fatty acid esters, multifunctional fatty acid ester, purified or hydrogenated natural or synthetic triglycerides, or partial esters, amide waxes, chloroparaffins, glycerol esters, or alkaline earth metal soaps.

Examples of suitable lubricants are also described in "Kunststoffadditive" [Plastics additives] (R. Gächter and H. Müller, Carl Hanser Verlag, 3rd edition, 1989, pp. 478-488). For the purposes of the present invention, particularly suitable lubricants are those of the Baerolub® product line from Baerlocher GmbH (Unterschleißheim, Germany).

It can be preferred that the liquid stabilizer compositions comprise glycerin oleate as a lubricant. It can also be preferred that the liquid stabilizer compositions comprise a multifunctional fatty acid ester as a lubricant. For example, the liquid stabilizer compositions according to the present invention can comprise a mixture of glycerin oleate and a multifunctional fatty acid ester.

The amount of lubricants in the liquid stabilizer compositions according to the present invention can be up to about 70 wt.-%, in particular up to about 50 wt.-%, for example from 0 wt.-% to about 30 wt.-%, or from about 0.1 to about 20 wt.-%, or from about 0.2 to about 15 wt.-%, or from about 0.5 to about 10 wt.-%, based on the total weight of the liquid stabilizer composition.

### Plasticizer

According to the present invention, suitable additives for the liquid stabilizer compositions are organic plasticizers.

Examples of suitable plasticizers are compounds from the group of the phthalic esters, such as dimethyl, diethyl, dibutyl, dihexyl, di-2-ethylhexyl, di-n-octyl, diisooctyl, diisononyl, diisodecyl, dicyclohexyl, dimethylcyclohexyl, dimethyl glycol, dibutyl glycol, benzyl butyl, or diphenyl phthalate, and also mixtures of phthalates, for example mixtures of alkyl phthalates having from 7 to 9 or from 9 to 11 carbon atoms in the ester alcohol, or a mixture of alkyl phthalates having from 6 to 10 or from 8 to 10 carbon atoms in the ester alcohol. Preferred plasticizers for the purposes of the present invention are dibutyl, dihexyl, di-2-ethylhexyl, di-n-octyl, diisooctyl, diisononyl, diisodecyl, diisotridecyl, and benzyl butyl phthalate, and mixtures of these alkyl phthalates.

Other suitable plasticizers are the esters of aliphatic dicarboxylic acids, in particular the esters of adipic, azelaic, cyclohexyldicarboxylic acid or sebacic acid, or a mixture of two or more thereof. Examples of these plasticizers are di-2-ethylhexyl adipate, diisooctyl adipate, Hexamoll DINCH®, diisononyl adipate, diisodecyl adipate, benzyl butyl adipate, benzyl octyl adipate, di-2-ethylhexyl azelate, di-2-ethylhexyl sebacate, and diisodecyl sebacate, preferably di-2-ethylhexyl acetate, Hexamoll DINCH® and diisooctyl adipate.

Equally suitable plasticizers are trimellitic esters, such as tri-2-ethylhexyl trimellitate, triisotridecyl trimellitate, triisooctyl trimellitate, and also trimellitic esters having from 6 to 8 carbon atoms, from 6 to 10 carbon atoms, from 7 to 9 carbon atoms, or from 9 to 11 carbon atoms in the ester group, or mixtures of two or more thereof.

Examples of other suitable plasticizers are the polymeric plasticizers described in "Kunststoffadditive" [Plastics additives] (R. Gächter and H. Müller, Carl Hanser Verlag, 3rd edition, 1989, chapter 5.9.6, pages 412-415), or "PVC Technology" (W. V. Titow, 4th edition, Elsevier Publishers, 1984, pages 165-170). Examples of the starting materials most commonly used for the preparation of polyester plasticizers are dicarboxylic acids, such as adipic, phthalic, azeleic, or sebacic acid, and diols, such as 1,2-propanediol, 1,3-butanediol, 1,4-butanediol, 1,6-hexanediol, neopentyl glycol, or diethylene glycol, or mixtures of two or more thereof.

Equally suitable plasticizers are the phosphoric esters described in "Taschenbuch der Kunststoffadditive" [Plastics additives handbook] (chapter 5.9.5, pages 408-412). Examples of suitable phosphoric esters are tributyl phosphate, tri-2-ethylbutyl phosphate, tri-2-ethylhexyl phosphate, trichloroethyl phosphate, 2-ethylhexyl diphenyl phosphate, triphenyl phosphate, tricresyl phosphate, or trixylenyl phosphate, or mixtures of two or more thereof.

Other suitable plasticizers are chlorinated hydrocarbons (paraffins) or the hydrocarbons described in "Kunststoffadditive" [Plastics additives] (R. Gächter and H. Müller, Carl Hanser Verlag, 3rd edition, 1989, chapter 5.9.14.2, pages 422-425 and chapter 5.9.14.1, page 422).

It can be preferred that the liquid stabilizer compositions according to the present invention comprise diisodecyl phthalate as an organic plasticizer.

The amount of organic plasticizers in the liquid stabilizer compositions according to the present invention is up to about 70 wt.-%, in particular up to about 50 wt.-%, for example from 0 wt.-% to about 30 wt.-%, or from about 0.1 to about 15 wt.-%, or from about 0.2 to about 10 wt.-%, based on the total weight of the liquid stabilizer composition.

### Phenolic antioxidants

According to the present invention, suitable additives for the liquid stabilizer compositions are phenolic antioxidants.

Examples of phenolic antioxidants are alkylated phenols, alkylated thiomethyl phenols, alkylated hydrochinones, hydroxylated thiodiphenyl ethers, alkylidene bisphenols, benzyl compounds, hydroxybenzylated malonates, aromatic hydroxybenzylated compounds, triazine compounds, acyl aminophenols, β-(3,5-di-tert-butyl-4-hydroxyphenyl)propionic acid esters, β-(5-tert-butyl-4-hydroxy-3-methylphenyl)propionic acid esters, β-(3,5-Dicyclohexyl-4-hydroxyphenyl)propionic acid esters, 3,5-di-tert-butyl-4-hydroxyphenyl acetic acid esters, and β-(3,5-di-tert-butyl-4-hydroxyphenyl)propionic acid amides. For example, the liquid stabilizer compositions according to the present invention comprise alkylated monophenols, alkylated thiomethyl phenols, alkylated hydrochinones, hydroxylated thiodiphenyl ethers, alkylidene bisphenols, or β-(3,5-di-tert-butyl-4-hydroxyphenyl)propionic acid esters.

Further useful antioxidants which can form part of the compositions according to the inventions are described on pages 33 to 35 of EP 1 046 668 A. For the purposes of the present invention, preferred antioxidants used are the products in the Irganox® product line (producer: formerly Ciba Specialty Chemicals, now BASF), *e.g*. Irganox® 1010 or 1076, or products from the Lowinox product line from Great Lakes.

It can be preferred that the liquid stabilizer compositions comprise 3,5-di-tert-butyl-4-hydroxyphenylpropionic acid esters with octanol, octadecanol or pentaerythritol.

The liquid stabilizer compositions according to the present invention may also comprise mixtures of two or more of the above phenolic antioxidants.

### Further additives

Pigments are also suitable as constituents of the liquid stabilizer compositions according to the present invention. Examples of suitable inorganic pigments are titanium dioxide, carbon black, Fe₂O₃, Sb₂O₃, (Ba, Sb)O₂, Cr₂O₃, spinells, such as cobalt blue and cobalt green, Cd(S, Se), or ultramarine blue. Examples of suitable organic pigments are azo pigments, phthalocyanine pigments, quinacridone pigments, perylene pigments, diketopyrrolopyrrol pigments, and anthraquinone pigments.

The liquid stabilizer compositions according to the present invention can also comprise fillers as described in "Handbook of PVC Formulating" (E.J. Wickson, John Wiley & Sons, Inc., 1993, pages 393-449), or reinforcing agents as described in "Taschenbuch der Kunststoffadditive" [Plastics additives handbook] (R. Gächter and H. Müller, Carl Hanser Verlag, 1990, pages 549-615). Examples of particularly suitable fillers or reinforcing agents are calcium carbonate (chalk), dolomite, wollastonite, magnesium oxide, magnesium hydroxide, silicate, glass fibers, talc, kaolin, carbon black, or graphite, woodflour, or other renewable raw materials. It can be preferred that the liquid stabilizer compositions according to the present invention comprises chalk.

The liquid stabilizer compositions according to the present invention can comprise antioxidants, UV absorbers, and light stabilizers, or blowing agents. Examples of suitable antioxidants are described on pages 33 to 35 of EP 1 046 668 A. For the purposes of the present invention, preferred antioxidants used are the products in the Irganox® product line (producer: Ciba Specialty Chemicals), *e.g*. Irganox® 1010 or 1076, or products from the Lowinox produce line from Great Lakes. Suitable UV absorbers and light stabilizers are disclosed on pages 35 and 36 of EP 1 046 668 A, the disclosure in that document is expressly incorporated herein by reference and is considered to be part of the disclosure of the present text.

Examples of suitable blowing agents are organic azo and hydrazo compounds, tetrazoles, oxazines, diphenoxy-4,4'-disulphohydrazide, isatoic anhydride, salts of citric acid, such as ammonium citrate, and also soda and sodium bicarbonate. Examples of particularly suitable compounds are diphenoxy- 4,4' disulph hydrazide, ammonium citrate, azodicarbonamide, or sodium bicarbonate, or a mixture of two or more thereof.

The liquid stabilizer compositions according to the present invention can also comprise impact modifiers and processing aids, gelling agents, antistatics, biocides, metal deactivators, optical brighteners, flame retardants, and antifogging compounds. Suitable compounds are described for example in "Kunststoff Additive" [Plastics additives] (R. Keßler and H. Müller, Carl Henser Verlag, 3rd edition, 1989, and in "Handbook of PVC Formulating", E.J. Wilson, J. Wiley & Sons, 1993). Preferred processing aids are acrylate polymers, for example PMMA.

### Method for producing a liquid stabilizer composition

Alongside the liquid stabilizer composition itself, the present invention also relates to the production of the liquid stabilizer composition.

The present invention provides a process for producing a liquid stabilizer composition. The process comprises reacting zinc oxide with an organic acid or a mixture of two or more organic acids in the presence of at least one organic phosphite ester (b) and a solvent (c).

Suitable organic acids according to the present invention are organic acids having linear or branched, saturated or unsaturated alkyl moieties having from 1 to 43 carbon atoms, saturated or unsaturated, substituted or unsubstituted cycloalkyl moieties with 5 to 43 carbon atoms, linear or branched, substituted or unsubstituted alkenyl moieties with 2 to 43 carbon atoms, linear or branched, substituted or unsubstituted alkinyl moieties with 2 to 43 carbon atoms, substituted or unsubstituted aryl moieties with 6 to 43 carbon atoms, or substituted or unsubstituted aralkyl moieties with 7 to 43 carbon atoms.

Preferred alkyl moieties are linear or branched, substituted or unsubstituted alkyl moieties with 4 to 23 carbon atoms, for example, with 7 to 23 carbon atoms. More preferred alkyl moieties are alkyl moieties with 11 to 19 carbon atoms. Preferred cycloalkyl moieties are saturated or unsaturated, substituted or unsubstituted cycloalkyl moieties with 4 to 23 carbon atoms, for example with 4 to 11 carbon atoms. More preferred cycloalkyl moieties are cycloalkyl moieties with 4 to 11 carbon atoms. Preferred alkenyl moieties are linear or branched, substituted or unsubstituted alkenyl moieties with 4 to 23 carbon atoms, for example with 7 to 19 carbon atoms. More preferred alkenyl moieties are alkenyl moieties with 11 to 19 carbon atoms. Preferred alkinyl moieties are linear or branched, substituted or unsubstituted alkinyl moieties with 4 to 23 carbon atoms, for example with 7 to 19 carbon atoms. Preferred aryl moieties are linear or branched, substituted or unsubstituted aryl moieties with 6 to 23 carbon atoms, for example with 6 to 11 carbon atoms.

It can be preferred that the method for producing a liquid stabilizer composition according to the present invention comprises reacting zinc oxide with an organic acid selected from the group consisting of saturated or unsaturated, linear or branched, substituted or unsubstituted organic mono- or di-carboxylic acids with 5 to 44 carbon atoms or a mixture of two or more thereof in the presence of at least one organic phosphite ester (b) and a solvent or a mixture of two or more solvents (c).

### Use of the stabilizer composition

The liquid stabilizer compositions according to the invention are suitable for the stabilization of halogenated thermoplastic resins. The present invention therefore further relates to the use of liquid stabilizer compositions according to the present invention for stabilizing halogenated thermoplastic resins.

### Polymer composition

Halogenated thermoplastic resins according to the present invention are polymers of vinyl chloride, vinyl resins which contain vinyl chloride units in the main polymer chain, copolymers of vinyl chloride and of vinyl esters of aliphatic acids, in particular vinyl acetate, copolymers of vinyl chloride with esters of acrylic and methacrylic acid, or acrylonitrile, or with mixtures of two or more thereof, the polymers of vinyl chloride with diene compounds or with unsaturated di-carboxylic acids, or with their anhydrides, for example copolymers of vinyl chloride with diethyl maleate, diethyl fumarate, or maleic anhydride, post-chlorinated polymers and copolymers of vinyl chloride, copolymers of vinyl chloride and of vinylidene chloride with unsaturated aldehydes, with ketones, and with other compounds, such as acrolein, crotonaldehydes, vinyl methyl ketone, vinyl methyl ether, vinyl isobutyl ether, and the like, polymers and copolymers of vinylidene chloride with vinyl chloride and with the other abovementioned polymerizable compounds, polymers of vinyl chloroacetate and of dichlorodivinyl ether, chlorinated polymers of vinyl acetate, chlorinated polymeric esters of acrylic acid and of α-substituted acrylic acids, chlorinated with polystyrenes, such as polydichlorostyrene, chlorinated polymers of ethylene, polymers and post-chlorinated polymers or chlorbutadiene and their copolymers with vinyl chloride, and mixtures of two or more of the polymers mentioned, or polymer mixtures comprising one or more of the above-mentioned polymers. Preferably, the halogenated thermoplastic resin is PVC.

Mixtures of halogenated and non-halogenated polymers can be equally suitable for stabilization by the inventive stabilizer compositions, for example mixtures of the abovementioned non-halogenated polymers with PVC, preferably mixtures of polyurethanes and PVC. Recycled materials derived from chlorine-containing polymers can also be stabilized by the inventive stabilizer compositions, and in principle any of the recycled materials derived from the abovementioned, halogenated polymers are suitable for this purpose. An example of a suitable material for the purposes of the present invention is recycled PVC.

Thus, a polymer composition according to the present invention can comprise only one halogen-containing polymer and a liquid stabilizer composition according to the present invention. However, it is equally possible that a polymer composition according to the present invention comprises a mixture of two or more halogen-containing polymers and a liquid stabilizer composition according to the present invention. It is also equally possible that a polymer composition according to the present invention comprises a mixture of one or more halogen-containing polymers and one or more halogen-free polymers and a liquid stabilizer composition according to the present invention.

Polymer compositions according to the present invention comprise an amount of from 0.1 to 30 phr, for example from about 0.2 to about 20 phr or from about 0.5 to about 15 phr or from about 1 to about 10 phr of the liquid stabilizer composition according to the present invention. The unit phr is "per hundred resin" and therefore relates to parts by weight per 100 parts by weight of polymer.

A polymer composition according to the present invention preferably comprises at least some content of PVC as a halogenated thermoplastic resin, and the PVC content here is at least about 20% by weight, preferably at least about 50% by weight, for example at least about 75% by weight or at least about 80% by weight, based on the total weight of the polymer composition.

According to the present invention, the polymer composition comprises the zinc salt of an organic acid (a) in an amount of from about 0.01 to about 15 phr, preferably in an amount of from about 0.02 to about 10 phr or from about 0.05 to about 5 phr or from about 0.08 to about 2 phr or from about 0.1 to about 1 phr, based on the total amount of the halogenated thermoplastic resin.

According to the present invention, the polymer composition comprises the organic phosphite ester (b) in an amount of from about 0.01 to about 15 phr, preferably in an amount of from about 0.02 to about 10 phr or from about 0.05 to about 5 phr or from about 0.08 to about 2 phr or from about 0.1 to about 1 phr, based on the total amount of the halogenated thermoplastic resin.

According to the present invention, the polymer composition can comprise an additive or a mixture of two or more additives in an amount of from 0 to 15 phr in an amount of from about 0.001 to about 10 phr, preferably in an amount of from about 0.005 to about 7 phr or from about 0.01 to about 5 phr or from about 0.08 to about 2 phr or from about 0.05 to about 3 phr or from about 0.1 to about 2.5 phr or from about 0.2 to about 2 phr, based on the total amount of the halogenated thermoplastic resin.

According to the present invention, the polymer composition comprises an epoxy compound in an amount of from 0 to 15 phr in an amount of from about 0.01 to about 10 phr, preferably in an amount of from about 0.05 to about 5 phr or from about 0.1 to about 3 phr or from about 0.2 to about 2 phr or from about 0.5 to about 1.5 phr, based on the total amount of the halogenated thermoplastic resin.

### Method for producing polymer composition

The present invention also provides a process for the stabilization of halogenated thermoplastic resins, in which a halogen-containing polymer or a mixture of two or more halogen-containing polymers, or a mixture of one or more halogen-containing polymers and of one or more halogen-free polymers is mixed with a stabilizer composition according to the present invention. The mixing of the polymers and the liquid stabilizer composition according to the invention can in principle take place at any time prior to or during the processing of the polymer. For example, the liquid stabilizer composition can be admixed prior to processing with the polymer present in the form of powder or of pellets. However, it is equally possible that the liquid stabilizer composition is added to the polymers in the softened or moltened state during processing, for example in an extruder.

The present invention therefore also provides a method for producing a polymer composition, comprising mixing a halogen-containing polymer or a mixture of two or more halogen-containing polymers, or a mixture of one or more halogen-containing polymers and of one or more halogen-free polymers with a liquid stabilizer composition according to the present invention.

The polymer compositions according to the present invention can be converted in a known manner to a desired form. Examples of suitable processes are calendaring, extruding, injection molding, sintering, extrusion blow molding, or the plastisol process. Polymer compositions according to the present invention are, for example, suitable for the production of calendared rigid PVC films.

### EXAMPLES

### Preparation of inventive example E1

A pressurizable laboratory reactor equipped with water separator and reflux condenser was charged with 469 g of an organic acid mix (C16/C18, saturated and unsaturated), 190 g of an aliphatic alcohol mix (C10-C12), 190 g of tristridecyl phosphite, 103 g of trisnonylphenyl phosphite, 234 g of epoxystearate, and 129 g of zinc oxide. The mixture was heated to 100 °C within one hour. 176 g of benzoic were added to the mixture in 10 portions within one hour and the mixture was allowed to react for further six hours at 100 °C. The water which evolved during the reaction was separated continuously. After cooling to room temperature a stabilizer composition according to the present invention was obtained which comprises 38.0 wt.-% of zinc oleate/stearate, 13.0 wt.-% of zinc benzoate, 13.0 wt.-% of a mixture of aliphatic alcohols with 11 to 13 carbon atoms, 12.8 wt.-% of tristridecyl phosphite and 7.0 wt.-% trisnonylphenyl phosphite and 16.0 wt.-% of 2-ethylhexyl epoxystearate.

### Testing of inventive examples E1-E3 and comparative examples CE1-CE2

The compositions according to inventive examples E2 and E3 were prepared in accordance with the composition as shown in example 1.

The stabilizer performance has been assessed in a PVC formulation as given below:

| | | |
|---|---|---|
| **Basic formulation:** | PVC | 100 phr |
| | polyacrylate | 10.0 phr |
| | PMMA | 1.5 phr |
| | epoxidized soya oil | 2.5 phr |
| | diisodecyl phthalate | 2.5 phr |
| | lubricant (ester basis) | 1.0 phr |

**Table 1: Formulation of stabilizer compositions according to the invention (E1-E3) and the comparative composition (CE1-CE3)**

| | **E1** | **E2** | **E3** | **CE1** | **CE2** |
|---|---|---|---|---|---|
| hydrotalcite [phr] | 1.1 | 1.1 | 1.1 | 1.1 | |
| phenolic antioxidant [phr] | 0.2 | 0.2 | 0.2 | 0.2 | |
| polyol (dipentaerithritol) (40 µm) [phr] | 0.2 | 0.2 | 0.2 | 0.2 | |
| stearoylbenzoylmethane [phr] | 0.3 | 0.3 | | 0.3 | |
| THEIC [phr] | 0.5 | | | 0.5 | |
| lubricant (ester basis) [phr] | | | | | |
| zinc oleate/sterate [phr] | 0.53 | 0.72 | 0.83 | | |
| zinc benzoate [phr] | 0.18 | 0.25 | 0.29 | 0.5 | |
| tristridecyl phosphite [phr] | 0.17 | 0.25 | 0.29 | 0.4 | |
| trisnonylphenyl phosphite [phr] | 0.10 | 0.13 | 0.15 | | |
| mixture of aliphatic C₁₀-C₁₂ alcohols [phr] | 0.18 | 0.25 | 0.29 | | |
| 2-ethylhexyl epoxystearate [phr] | 0.22 | 0.30 | 0.35 | | |
| zinc laurate [phr] | | | | 0.5 | |
| octyltinmercaptide [phr] | | | | | 2.5 |

The components of the basic formulation and the components according to table 1 were mixed and homogenized for 2 min in a mixer (Vorwerk Thermomix). The mixtures were milled on mixing rolls for 3 min at 180°C to produce pressed sheets which are subsequently transformed to pressed plates for the determination of the transparency, the initial color. The color stability upon heat treatment was determined using the sheets directly.

The pressed plates were attached to a black background for determining their transparency and their initial color. The results for the transparency are shown in grades from 1 (very high transparency) to 5 (very low transparency). The results for the initial color are shown in grades from 1 (very low discoloration) to 5 (very high discoloration).

**Table 2: Test results**

| | **E1** | **E2** | **E3** | **CE1** | **CE2** |
|---|---|---|---|---|---|
| Transparency | 3 | 2 | 2 | 4 | 2 |
| Discoloration | 2 | 1 | 4 | 3 | 1 |

The color stability of the pressed sheets was determined in a Mathis oven test by exposing the sheets to a temperature of 190°C. The a* and b* values of the sheets according to the L*a*b* color space were determined in intervals of 5 min.

**Table 3: Test results**

| | **E2** | | **CE1** | | **CE3** | |
|---|---|---|---|---|---|---|
| | a* | b* | a* | b* | a* | b* |
| 0 min | -0.7 | -2.82 | -0.78 | -2.68 | -0.85 | -2.56 |
| 5 min | -0.79 | -2.65 | -0.89 | -2.45 | -0.88 | -1.91 |
| 10 min | -1 | -2 | -1.14 | -1.05 | -1.03 | -1.08 |
| 15 min | -1.29 | -0.95 | -1.7 | 0.54 | -1.52 | -0.32 |
| 20 min | -1.93 | 0.16 | -2.16 | 1.53 | -1.85 | 1 |
| 25 min | -2.26 | 2 | -2.87 | 3.16 | -2.32 | 2.25 |
| 30 min | -2.72 | 3.53. | -3.3 | 4.6 | -2.72 | 3.4 |
| 35 min | -3.59 | 4.69 | -3.78 | 6.48 | -3.26 | 5.52 |
| 40 min | -3.77 | 7.13 | -4.19 | 9.11 | -3.85 | 8.12 |

These results show that the yellowness upon heat treatment of the pressed sheets, indicated by a positive b* value, can be reduced by using a liquid stabilizer composition according to the present invention (E2) with regard to the use of Ca/Zn stabilizer compositions (CE1) or Sn stabilizer compositions (CE2).

### Example 4

The stabilizer compositions for example 4 were prepared in accordance with the compositions as shown in example 1.

| | | |
|---|---|---|
| **Basic formulation:** | PVC | 100 phr |
| | processing aid | 2.8 phr |
| | lubricant | 1.6 phr |

**Table 4: Formulation of stabilizer compositions according to the invention (E4) and the comparative composition (CE3)**

| | **E4** | **CE3** |
|---|---|---|
| paraffin wax | 0.25 | 0.4 |
| zinc oleate/stearate [phr] | 0.38 | |
| zinc benzoate [phr] | 0.13 | |
| tristridecyl phosphite [phr] | 0.20 | |
| mixture of aliphatic C₁₀-C₁₂ alcohols [phr] | 0.13 | |
| 2-ethylhexyl epoxystearate [phr] | 0.16 | |
| SBM | 0.7 | |
| Hydrotalcite | 3.0 | |
| dibutyltin mercaptide | | 3.0 |
| epoxidized soya oil [phr] | | 1.0 |
| tris(nonylphenyl) phosphite [phr] | | 0.5 |

The constituents of the formulations were mixed together with PVC and other additives in a heating/cooling mixer, up to a processing temperature of 120°C, and subsequently cooled to 40°C. The dryblend prepared that way was then extruded to calibrated strips by an extruder. The thermal stability was determined by means of a congored test (DIN VDE 0472 part 614 at 180°C). The Vicat softening temperature was determined according to DIN EN ISO 306.

**Table 5: Test results**

| | Stability Congored test [min] | Vicat softening temperature [°C] |
|---|---|---|
| **E4** | 61 | 75.0 |
| **CE3** | 43 | 67.1 |

Both-extrudates E4 and CE3 have similar transparency and rheology.

## Claims

1. Liquid stabilizer composition for the stabilization of halogenated thermoplastic resins comprising
(a) a zinc salt of an organic acid or a mixture of two or more zinc salts of an organic acid,
(b) an organic phosphite ester or a mixture of two or more organic phosphite esters, and
(c) a solvent.

2. Liquid stabilizer composition according to claim 1, wherein an organic acid of constituent (a) is selected from the group consisting of saturated or unsaturated, linear or branched, substituted or unsubstituted organic mono- or di-carboxylic acids with 5 to 44 carbon atoms.

3. Liquid stabilizer composition according to any of claims 1 or 2, wherein constituent (a) comprises zinc oleate.

4. Liquid stabilizer composition according to any of claims 1 to 3, wherein constituent (a) is a mixture of two salts of an organic acid.

5. Liquid stabilizer composition according to any of claims 1 to 4 comprising constituent (a) in an amount of from 0.1 to 80 wt.-% based on the total amount of the liquid stabilizer composition.

6. Liquid stabilizer composition according to any of claims 1 to 5, wherein the organic phosphite ester or each of the two or more organic phosphite esters (b) has three organic moieties that are independently from each other alkyl moieties with 1 to 44 carbon atoms, aryl moieties with 6 to 44 carbon atoms, aralkyl moieties with 7 to 44 carbon atoms, cycloalkyl moieties with 5 to 44 carbon atoms, alkenyl moieties with 2 to 44 carbon atoms or alkinyl moieties with 2 to 44 carbon atoms.

7. Liquid stabilizer composition according to claim 6, wherein the three organic moieties of the organic phosphite ester or of each of the two or more organic phosphite esters (b) are independently from each other alkyl moieties with 9 to 24 carbon atoms.

8. Liquid stabilizer composition according to any of claims 1 to 7 comprising constituent (b) in an amount of from 0,1 to 80 wt.-% based on the total amount of the liquid stabilizer composition.

9. Liquid stabilizer composition according to any of claims 1 to 8, wherein the solvent (c) is an aliphatic alcohol or a mixture of two or more aliphatic alcohols.

10. Liquid stabilizer composition according to any of claims 1 to 9, wherein the solvent (c) is a mixture of two or more aliphatic alcohols each having from 10 to 14 carbon atoms.

11. Liquid stabilizer composition according to any of claims 1 to 10 comprising the solvent (c) in an amount of from 1 to 99 wt.-% based on the total amount of the liquid stabilizer composition.

12. Liquid stabilizer composition according to any of claims 1 to 11 additionally comprising an additive or a mixture of two or more additives.

13. Liquid stabilizer composition according to claim 12 comprising at least one epoxy compound as an additive.

14. Method for producing a liquid stabilizer composition according to any of claims 1 to 13 comprising reacting zinc oxide with an organic acid or a mixture of two or more thereof in the presence of an organic phosphite ester or am mixture of two or more organic phosphite esters (b) and a solvent (c).

15. Use of a liquid stabilizer composition according to any of claims 1 to 13 for stabilizing halogenated thermoplastic resins.

16. Polymer composition comprising a halogen-containing polymer and a liquid stabilizer composition according to any of claims 1 to 13.

17. Polymer composition according to claim 16 comprising the liquid stabilizer composition in an amount of from 0.2 to 25 phr based on the total amount of the polymer.

18. Method for producing a polymer composition comprising mixing a halogen-containing polymer, a mixture of two or more halogen-containing polymers or a mixture of one or more halogen-containing polymers and one or more halogen-free polymers with a liquid stabilizer composition according to any of claims 1 to 13.
